# EUROPÄISCHE PATENTANMELDUNG

(11) **EP 3 454 449 A1**
(43) Veröffentlichungstag der Anmeldung: **13.03.2019**
(21) Anmeldenummer: 17189739.0
(22) Anmeldetag: 07.09.2017
(51) Int. Cl.: H02J 7/04, H02J 7/00

(54) **VERFAHREN ZUM STEUERN EINES AKKUMULATORS AN EINER LADEVORRICHTUNG**

(71) Anmelder: HILTI Aktiengesellschaft, 9494 Schaan (LI)
(72) Erfinder: Hauser, Klaus, 86830 Schwabmünchen (DE); Mayer, Stefan, 85221 Dachau (DE); Koscheck, David, 81735 München (DE)
(74) Vertreter: Hilti Aktiengesellschaft Corporate Intellectual Property

(57) **Zusammenfassung**

Verfahren zum Laden eines Akkumulators durch eine Ladevorrichtung, wobei der Akkumulator wenigstens eine Energiespeicherzelle, eine Datenschnittstelle sowie einen Aufweckschaltkreis enthält zum Aktivieren einer Steuerungselektronik des Akkumulators und die Ladevorrichtung eine Datenschnittstelle, eine Steuerung, einen Timer sowie eine Schaltervorrichtung enthält, und wobei die Datenschnittstellen über eine Kommunikationsleitung für eine differentielle Kommunikation zwischen dem Akkumulator und der Ladevorrichtung miteinander verbunden sind.

Das Verfahren enthält die Verfahrensschritte
- Einstellen des Timers auf eine vorbestimmte Zeitdauer;
- Einstellen der Steuerungselektronik des Akkumulators in einen Deaktivierungsmodus, sodass kein Ladestrom von der Ladevorrichtung zu dem Akkumulator fließt und kein Strom von der wenigstens einen Energiespeicherzelle in die Steuerungselektronik des Akkumulators fließt;
- Senden wenigstens eines Signals von der Ladevorrichtung zu dem Akkumulator über die Kommunikationsleitung nach Ablauf der vorbestimmten Zeitdauer;
- Aktivieren des Aufweckschaltkreises zum Aktivieren einer Steuerungselektronik durch Detektieren eines Spannungswertes von der Kommunikationsleitung, wobei der Spannungswert entweder dem dominanten oder rezessiven Zustand der Kommunikationsleitung entspricht;
- Einstellen der Steuerungselektronik in einen Aktivierungsmodus durch den Aufweckschaltkreis; und
- Anforderung oder Freigabe eines Ladestroms von der Ladevorrichtung durch den Akkumulator.

System enthaltend einen Akkumulator und eine Ladevorrichtung zur Durchführung des Verfahrens.

Akkumulator zur Durchführung des Verfahrens.

Ladevorrichtung zur Durchführung des Verfahrens.

## Beschreibung

Die vorliegende Erfindung betrifft ein Verfahren zum Laden eines Akkumulators durch eine Ladevorrichtung, wobei der Akkumulator wenigstens eine Energiespeicherzelle, eine erste Datenschnittstelle sowie einen Aufweckschaltkreis enthält zum Aktivieren einer Steuerungselektronik des Akkumulators und die Ladevorrichtung eine zweite Datenschnittstelle, eine Steuerung, einen Timer sowie eine Schaltervorrichtung enthält, und wobei die Datenschnittstellen über eine erste und zweite Kommunikationsleitung für eine differentielle Kommunikation zwischen dem Akkumulator und der Ladevorrichtung miteinander verbunden sind.

Des Weiteren betrifft die vorliegende Erfindung ein System enthaltend einen Akkumulator und eine Ladevorrichtung zur Durchführung des erfindungsgemäßen Verfahrens, wobei der Akkumulator wenigstens eine Energiespeicherzelle, eine erste Datenschnittstelle sowie einen Aufweckschaltkreis enthält zum Aktivieren einer Steuerungselektronik des Akkumulators und die Ladevorrichtung eine zweite Datenschnittstelle, eine Steuerung, einen Timer sowie eine Schaltervorrichtung enthält, und wobei die Datenschnittstellen über eine Kommunikationsleitung für eine differentielle Kommunikation zwischen dem Akkumulator und der Ladevorrichtung miteinander verbunden sind.

Darüber hinaus betrifft die vorliegende Erfindung einen Akkumulator zur Durchführung des Verfahrens, wobei der Akkumulator wenigstens eine Energiespeicherzelle, eine erste Datenschnittstelle sowie einen Aufweckschaltkreis enthält zum Aktivieren einer Steuerungselektronik des Akkumulators.

Ferner betrifft die vorliegende Erfindung eine Ladevorrichtung zur Durchführung des Verfahrens, wobei die Ladevorrichtung eine zweite Datenschnittstelle, eine Steuerung, einen Timer sowie eine Schaltervorrichtung enthält.

Zum Speichern einer elektrischen Energie in einem Akkumulator (auch Akku genannt) wird der Akkumulator mit einer netzbetriebenen Ladevorrichtung (auch Ladegerät) verbunden. Durch die Ladevorrichtung fließt eine elektrische Energie in Form eines Ladestroms zu dem Akkumulator und insbesondere zu den einzelnen Akku-Zellen des Akkumulators.

Das Laden eines Akkumulators durch die Ladevorrichtung kann jedoch problematisch sein, wenn der Akkumulator nahezu vollständig entladen (d.h. weniger als 20% der Nennkapazität) und zusätzlich zu heiß (d.h. über 45°C) ist. Ein relativ langer Ladevorgang, bei dem der Akkumulator wieder nahezu vollständig aufgeladen werden soll (d.h. mehr als 70% der Nennkapazität), erhöht dabei zusätzlich die bereits kritische Temperatur des Akkumulators. Dieses Problem tritt insbesondere dann auf, wenn der Akkumulator intensiv, d.h. mit einem langen und hohen Stromfluß als Energiequelle für diene Werkzeugmaschine verwendet wurde.
Um den Akkumulator vor möglichen Beschädigungen beim Laden durch die Ladevorrichtung zu schützen, sollte der Akkumulator vor dem Wiederaufladen abgekühlt und unter 45°C gebracht werden.
Möglicherweise erkennt jedoch ein Anwender die zu hohe Temperatur eines Akkumulators nicht, sodass der zu heiße Akkumulator ohne entsprechende Abkühlung wieder aufgeladen wird. Eine Beschädigung des Akkumulators ist hierdurch möglich.

Aufgabe der vorliegenden Erfindung ist es daher, ein Verfahren zum Laden eines Akkumulators durch eine Ladevorrichtung bereitzustellen, mit dem die vorstehend genannten Probleme gelöst werden kann. Des Weiteren ist es Aufgabe der vorliegenden Erfindung ein System enthaltend einen Akkumulator und eine Ladevorrichtung zur Durchführung des Verfahrens zur Verfügung zu stellen, mit dem das vorstehend genannte Problem gelöst werden kann. Darüber hinaus ist es Aufgabe der vorliegenden Erfindung einen Akkumulator und eine Ladevorrichtung zur Verfügung zu stellen, um das vorstehend genannte Problem zu lösen.

Die Aufgabe wird gelöst durch den Gegenstand des unabhängigen Anspruchs 1, 2, 3 und 4.

Die Aufgabe wird insbesondere gelöst durch ein Verfahren zum Laden eines Akkumulators durch eine Ladevorrichtung, wobei der Akkumulator einen Aufweckschaltkreis enthält zum Aufwecken einer Steuerungselektronik des Akkumulators, die Ladevorrichtung eine Steuerung, einen Timer sowie eine Schaltervorrichtung enthält und wobei ein CAN-Datenbus zur differentiellen Kommunikation zwischen dem Akkumulator und der Ladevorrichtung vorgesehen ist.

Erfindungsgemäß enthält das Verfahren die folgenden Verfahrensschritte:
- Einstellen des Timers auf eine vorbestimmte Zeitdauer;
- Einstellen der Steuerungselektronik des Akkumulators in einen Deaktivierungsmodus, sodass kein Ladestrom von der Ladevorrichtung zu dem Akkumulator fließt und kein Strom von der wenigstens einen Energiespeicherzelle zu der Steuerungselektronik des Akkumulators fließt;
- Senden wenigstens eines Signals von der Ladevorrichtung zu dem Akkumulator über die erste und zweite Kommunikationsleitung nach Ablauf der vorbestimmten Zeitdauer;
- Aktivieren des Aufweckschaltkreises zum Aktivieren einer Steuerungselektronik durch Detektieren eines Spannungswertes von der Kommunikationsleitung, wobei der Spannungswert entweder dem dominanten oder rezessiven Zustand der ersten oder zweiten Kommunikationsleitung entspricht;
- Einstellen der Steuerungselektronik in einen Aktivierungsmodus durch den Aufweckschaltkreis; und
- Anforderung oder Freigabe eines Ladestroms von der Ladevorrichtung durch den Akkumulator.

Hierdurch kann erreicht werden, dass der Akkumulator vor einem Ladevorgang zunächst für eine gewisse Zeitdauer abkühlen kann, obwohl dieser bereits mit der Ladevorrichtung verbunden ist. Der Anwender muss hierdurch den Akkumulator nicht auf eine zu hohe Temperatur überprüfen und ggf. den Akkumulator zunächst abkühlen lassen, bevor der Akkumulator mit der Ladevorrichtung zum Laden des Akkumulators verbunden wird. Die Einstellung des Timers ermöglicht dabei einen automatischen Beginn des Ladevorgangs nachdem der Akkumulator eine gewisse Zeit zum Abkühlen hatte bzw. eine gewisse Temperatur wieder erreicht hat. Die Abkühlung wird insbesondere dadurch erreicht, dass der Akkumulator nachdem dieser mit der Ladevorrichtung zum Wiederaufladen verbunden wurde, zunächst in einen Ausschaltmodus bzw. Ruhemodus versetzt, bei dem die Steuerungselektronik des Akkumulators ausgeschaltet und somit keine weitere Wärme in dem Akkumulator erzeugt wird. Außerdem fließt auch kein elektrischer Strom von den Energiespeicherzellen zur Steuerungselektronik, wodurch eine bereits schon stark entladene Energiespeicherzelle nicht weiter entladen wird und eine mögliche Beschädigung der annähernd vollständig entladenen Energiespeicherzelle vermieden werden kann. Dadurch, dass die Steuerungselektronik auch nicht von den Energiespeicherzellen des Akkumulators mit elektrischem Strom versorgt und folglich auch nicht hierdurch aktiviert wird, kann sich die Steuerungselektronik auch nicht weiter erwärmen.

Das Anforderung oder Freigabe eines Ladestroms bedeutet, dass der Akkumulator in der Lage ist von der Ladevorrichtung einen Ladestrom mit einer vorbestimmten maximalen Stromstärke zu empfangen. Hierzu wird entweder ein entsprechendes Signal von dem Akkumulator an die Ladevorrichtung gesendet, dass ein Ladestrom mit einer maximal möglichen Stromstärke zu dem Akkumulator fließen soll, oder der Akkumulator ist in der Lage durch Messen der Stromstärke eines Ladestroms, der von der Ladevorrichtung zu dem Akkumulator gesendet wird, den Ladestrom zu den Energiespeicherzellen fließen zu lassen, wenn der Ladestrom eine Stromstärke geringer als die maximal mögliche Stromstärke besitzt.

Optional kann die Ladevorrichtung mit einem Lüfter ausgestaltet sein, um den Akkumulator vor dem eigentlichen Ladevorgang und nach dem Einstellen des Timers entsprechend zu kühlen.

Gemäß einer vorteilhaften Ausgestaltung der vorliegenden Erfindung kann es möglich sein, dass nach dem Verfahrensschritt des Einstellens der Steuerungselektronik des Akkumulators in einen Deaktivierungsmodus, sodass kein Ladestrom von der Ladevorrichtung zu dem Akkumulator fließt, eine separate Aufweckfunktion, auch Wake-Up-Funktion genannt, der Ladevorrichtung zum Aufwecken bzw. Aktivieren der Steuerungselektronik des Akkumulators deaktiviert wird. Durch die Deaktivierung der Wake-Up-Funktion wird verhindert, dass der Akkumulator frühzeitig von dem Deaktivierungsmodus wieder in einen Aktivierungsmodus gestellt wird. Durch eine zu frühe Aktivierung bzw. Reaktivierung des Akkumulators kann beispielsweise ein ausreichendes Abkühlen des Akkumulators nicht sichergestellt werden.

Entsprechend einer weiteren vorteilhaften Ausführungsform der vorliegenden Erfindung kann es möglich sein, dass nach dem Verfahrensschritt des Einstellens des Timers auf eine vorbestimmte Zeitdauer eine Kühlvorrichtung aktiviert wird, um Bestandteile des Akkumulators und/oder Bestandteile der Ladevorrichtung zu kühlen. Bei der Kühlvorrichtung kann es sich um einen Lüfter handeln, der so in der Ladevorrichtung positioniert ist, dass Umgebungsluft zum Kühlen auf Bestandteile des Akkumulators und/oder Bestandteile der Ladevorrichtung strömen kann. Alternativ kann es vorteilhaft sein, dass die Kühlvorrichtung in dem Akkumulator positioniert ist, um Bestandteile des Akkumulators und/oder Bestandteile der Ladevorrichtung zu kühlen.

Die Aufgabe wird des Weiteren gelöst durch ein System enthaltend einen Akkumulator und eine Ladevorrichtung zur Durchführung des Verfahrens, wobei der Akkumulator wenigstens eine Energiespeicherzelle, eine erste Datenschnittstelle sowie einen Aufweckschaltkreis enthält zum Aktivieren einer Steuerungselektronik des Akkumulators und die Ladevorrichtung eine zweite Datenschnittstelle, eine Steuerung, einen Timer sowie eine Schaltervorrichtung enthält, und wobei die Datenschnittstellen über eine Kommunikationsleitung für eine differentielle Kommunikation zwischen dem Akkumulator und der Ladevorrichtung miteinander verbunden sind.

Darüber hinaus wird die Aufgabe gelöst durch einen Akkumulator zur Durchführung des Verfahrens, wobei der Akkumulator wenigstens eine Energiespeicherzelle, eine erste Datenschnittstelle sowie einen Aufweckschaltkreis enthält zum Aktivieren einer Steuerungselektronik des Akkumulators.

Des Weiteren wird die Aufgabe gelöst durch eine Ladevorrichtung zur Durchführung des Verfahrens, wobei die Ladevorrichtung eine zweite Datenschnittstelle, eine Steuerung, einen Timer sowie eine Schaltervorrichtung enthält.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:

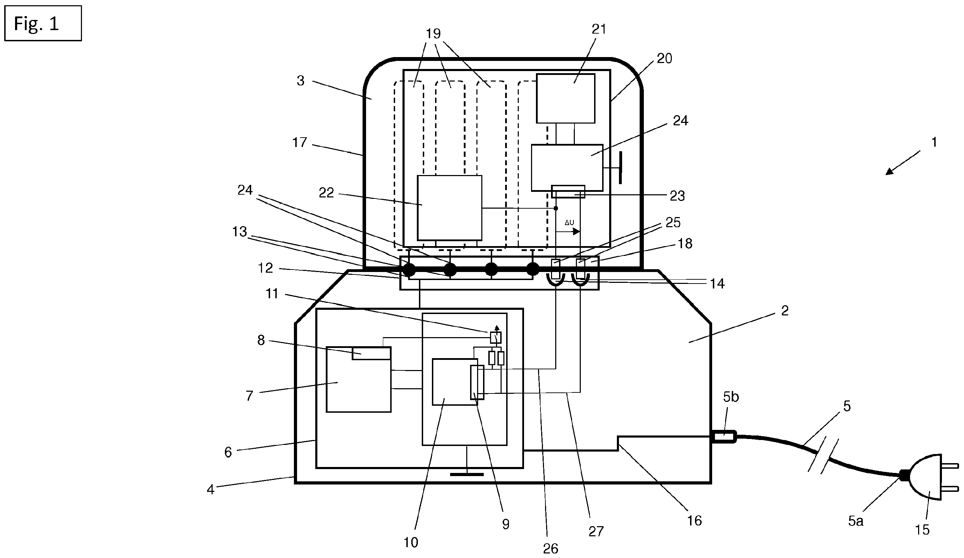

- Fig. 1: einen Querschnitt durch einen Akkumulator und eine Ladevorrichtung.

### Ausführungsbeispiele:

In Figur 1 ist ein erfindungsgemäßes System 1 mit einer Ladevorrichtung 2 und ein Akkumulator 3 dargestellt. Der Akkumulator 3 ist für einen Ladevorgang mit der Ladevorrichtung 2 verbunden. Bei einem Ladevorgang fließt elektrischer Strom von der Ladevorrichtung 2 zum Akkumulator 3, um ein elektrische Energie in Form einer elektrischen Ladung in dem Akkumulator 3 zu speichern. Ein geladener Akkumulator 3 kann einer Werkzeugmaschine, wie z.B. einem Akku-Schrauber, eine Bohrmaschine oder dergleichen, als Energiequelle dienen. Der Akkumulator 3 wird hierzu von der Ladevorrichtung 2 gelöst und mit einer entsprechenden Werkzeugmaschine elektrisch verbunden. Die Werkzeugmaschine ist in der Figur nicht dargestellt.

Die Ladevorrichtung 2 enthält im Wesentlichen ein Gehäuse 4 mit einem Stromkabel 5, welches dazu dient die Ladevorrichtung 2 mit einer Netzstromquelle (auch Steckdose genannt) elektrisch zu verbinden. Die Netzstromquelle ist in der Figur nicht dargestellt.
In dem Gehäuse 4 der Ladevorrichtung 2 ist unter anderem eine Steuerung 6 mit einem Mikrocontroller 7 (auch als MCU bezeichnet), einem Timer 8, eine Datenschnittstelle 9 mit einem ersten Transceiver 10 sowie einer Schaltervorrichtung 11 enthalten.
Die Steuerung 6 dient zum Steuern und Regeln eines Ladevorgangs. Die Datenschnittstelle 9 der Ladevorrichtung 2 ist dabei eine von insgesamt zwei Datenschnittstellen, die jeweils Bestandteile eines Kommunikationssystems zwischen der Ladevorrichtung 2 und dem mit der Ladevorrichtung 2 verbundenen Akkumulator 3. Die zweite Datenschnittstelle 23 ist in dem Akkumulator 3 enthalten und wird nachfolgend beschrieben.
Das Kommunikationssystem basiert auf einer differentiellen Kommunikation. In dem vorliegenden Ausführungsbeispiel handelt es sich bei dem Kommunikationssystem um einen CAN-Datenbus. Es ist jedoch auch möglich, dass ein anderes geeignetes Kommunikationssystem verwendet werden kann.
An einer Oberseite des Gehäuses 4 ist eine Ladevorrichtung-Schnittstelle 12 vorgesehen. Die Ladevorrichtung-Schnittstelle 12 enthält dabei eine Anzahl an Stromanschlüssen 13 zum Übertragen von elektrischem Strom sowie Datenanschlüsse 14 zum Senden und Empfangen von Signalen zwischen der Ladevorrichtung 2 und dem Akkumulator 3.
Das Stromkabel 5 enthält ein erstes Ende 5a und ein zweites Ende 5b. Das erste Ende 5a des Stromkabels 5 weist einen Stecker 15 auf und dient zum wiederlösbaren Verbinden der Ladevorrichtung 2 mit einer Netzstromquelle. Das zweite Ende 5b des Stromkabels 5 ist an dem Gehäuse 4 der Ladevorrichtung 2 und über eine Leitung 16 mit der Steuerung 6 der Ladevorrichtung 2 verbunden, sodass elektrischer Strom von der (nicht gezeigten) Netzstromquelle zu der Steuerung 6 fließen kann. Von der Steuerung 6 führen weitere Leitungen 16 zu den Stromanschlüssen 13, um an den Stromanschlüssen 13 elektrischen Strom bereitzustellen.

Der Akkumulator 3 enthält im Wesentlichen ein Gehäuse 17 mit einer Akku-Schnittstelle 18. In dem Gehäuse 17 des Akkumulators 3 sind eine Vielzahl an Energiespeicherzellen 19 sowie eine Steuerungselektronik 20 mit einem Mikrocontroller 21 und einem Aufweckschaltkreis 22 (auch als Wake-Up-Circuit bezeichnet) enthalten. Der Aufweckschaltkreis 22 dient zum Einstellen der Steuerungselektronik 20 von einem Deaktivierungsmodus in einen Aktivierungsmodus. Mit anderen Worten: der Aufweckschaltkreis 22 weckt die Steuerungselektronik 20 wieder auf, nachdem diese eingeschlafen ist.
Der Akkumulator 3 enthält des Weiteren eine Datenschnittstelle 23 mit einem zweiten Transceiver 24. Die Datenschnittstelle 23 des Akkumulators 3 ist ebenfalls Bestandteil des Kommunikationssystems zwischen der Ladevorrichtung 2 und dem mit der Ladevorrichtung 2 verbundenen Akkumulator 3. Wie bereits vorstehend erwähnt, basiert das Kommunikationssystem auf einer differentiellen Kommunikation. In dem vorliegenden Ausführungsbeispiel handelt es sich bei dem Kommunikationssystem um einen CAN-Datenbus. Die Energiespeicherzellen 19 können auch als Akku-Zellen bezeichnet werden und dienen zum Aufnehmen, Speichern und Bereitstellen einer elektrischen Energie.
Die Akku-Schnittstelle 18 ist an einer Seite des Gehäuses 17 positioniert. Die Akku-Schnittstelle 18 enthält eine Anzahl an Stromsteckern 24 zum Aufnehmen von elektrischem Strom sowie Datensteckern 25 zum Senden und Empfangen von Signalen zwischen der Ladevorrichtung 2 und dem Akkumulator 3. Über die Stromstecker 24 kann der elektrische Strom zu den Energiespeicherzellen 19 geleitet werden.
Wie in Figur 1 gezeigt, sind die Stromstecker 24 des Akkumulators 3 mit den Stromanschlüssen 13 der Ladevorrichtung 2 verbunden. Ebenso sind die Datenstecker 25 des Akkumulators 3 mit den Datenanschlüssen 14 der Ladevorrichtung 2 verbunden.
Durch die Verbindung kann elektrischer Strom zum Aufladen der Energiespeicherzellen 19 von der Netzstromquelle über die Ladevorrichtung 2 zu dem Akkumulator 3 fließen. Des Weiteren können Signale zur differentiellen Kommunikation zwischen dem Akkumulator 3 und der Ladevorrichtung 2 ausgetauscht werden.

Die differentielle Kommunikation zwischen dem Akkumulator 3 und der Ladevorrichtung 2 erfolgt über eine erste und zweite Kommunikationsleitung 26, 27 zwischen den Datenschnittstelle 23 des Akkumulators 3 und Datenschnittstelle 9 der Ladevorrichtung 2. Im vorliegenden Ausführungsbeispiel sind die jeweiligen Datenschnittstellen 23, 9 jeweils mit einem CAN-Transceiver ausgestattet.

Wie in Figur 1 angedeutet ist die erste und zweite Kommunikationsleitung 26, 27 für die differentielle Kommunikation zwischen dem Akkumulator 3 und der Ladevorrichtung 2 jeweils mit dem ersten Transceiver 10 und dem zweiten Transceiver 24 verbunden. In dem Ausführungsbeispiel ist das Kommunikationssystem beispielsweise als CAN-Datenbus ausgestaltet. Die erste Kommunikationsleitung 26 ist in dem dargestellten CAN-Datenbus als COM-High-Leitung und die zweite Kommunikationsleitung 27 als COM-Low-Leitung ausgestaltet. Die als COM-High bzw. COM-High-Leitung ausgestaltete erste Kommunikationsleitung 26 hat einen Spannungswert von 3,5 Volt in einem dominanten Zustand. Die als COM-Low bzw. COM-Low-Leitung ausgestaltete zweite Kommunikationsleitung 27 hat hingegen einen Spannungswert von 1,5 Volt in einem dominanten Zustand. In einem rezessiven Zustand beträgt der Spannungswert der als COM-High ausgestalteten ersten Kommunikationsleitung 26 und der als COM-Low ausgestalteten zweiten Kommunikationsleitung 27 2,5 Volt. Es ist jedoch auch möglich, dass der Spannungswert im jeweiligen dominanten Zustand höher oder niedriger als 1,5 bzw. 3,5 Volt und der Spannungswert im rezessiven Zustand höher oder niedriger als 2,5 Volt liegt. Der Spannungswert liegt jedoch im rezessiven Zustand nicht niedriger als 0,9 Volt.

Wie ebenfalls der Figur 1 zu entnehmen ist, ist der Aufweckschaltkreis 22 des Akkumulators 3 mit der als COM-High ausgestalteten ersten Kommunikationsleitung 26 verbunden. Alternativ kann der Aufweckschaltkreis 22 des Akkumulators 3 mit der als COM-Low ausgestalteten zweiten Kommunikationsleitung 26 verbunden sein.

In dem Fall, dass der Akkumulator 3 vor und/oder während eines Ladevorgangs zu heiß wird, d.h. einen vorbestimmten Schwellwert einer Temperatur für den Akkumulator 3 übersteigt, wird ein entsprechendes Signal von dem Akkumulator 3 über die Datenschnittstelle 23 zu dem Timer 8 in der Ladevorrichtung 2 gesendet. Durch das Signal wird der Timer 8 aktiviert, sodass nach einer bestimmten Zeitdauer (auch als Countdown bezeichnet) ein Signal von dem Timer 8 zu der Schaltervorrichtung 11 gesendet wird. Die Zeitdauer kann dabei beispielsweise zwischen 20 und 200 Sekunden liegen. Die Länge der Zeitdauer steht dabei in Abhängigkeit zu der erreichten Temperatur des Akkumulators 3. Je höher die Temperatur des Akkumulators 3 desto länger die Zeitdauer.

Nachdem der Timer 8 aktiviert ist, wird der Ladevorgang durch die Steuerungselektronik 20 des Akkumulators 3 unterbrochen. Die Temperaturüberwachung erfolgt mittels eines nicht gezeigten Heißleiters (auch NTC-Widerstand oder NTC-Thermistor genannt), der in dem Akkumulator 3 positioniert ist. Während der Unterbrechung des Ladevorgangs fließt kein Ladestrom von der Ladevorrichtung 2 zu den Energiespeicherzellen 19 des Akkumulators 3. Des Weiteren fließt auch kein Strom von den Energiespeicherzellen 19 zu der Steuerungselektronik 20 des Akkumulators 3. Die Unterbrechung erfolgt nach dem Senden eines entsprechenden Signals von der Steuerungselektronik 20 über die erste und zweite Kommunikationsleitung 26, 27 an die Steuerung 6 der Ladevorrichtung 2.

Nach Unterbrechung des Ladevorgangs wird die Steuerungselektronik 20 des Akkumulators 3 in einen Deaktivierungsmodus versetzt, wodurch die gesamte Elektronik des Akkumulators 3 ausgeschaltet wird und nicht weiter zur Erwärmung des Akkumulators 3 beiträgt.
Nachdem der Ladevorgang unterbrochen ist, wodurch kein Strom mehr zu den Energiespeicherzellen 19 oder der Steuerungselektronik 20 fließt und sich der Akkumulator 3 in dem Deaktivierungsmodus befindet, wird der Akkumulator 3 nicht weiter erwärmt und kann abkühlen. Um die Abkühlung zusätzlich zu beschleunigen, wird ein (nicht gezeigter) Lüfter aktiviert, um relativ kühle Umgebungsluft durch den Akkumulator 3 strömen zu lassen.

Wie bereits vorstehend erwähnt, wird nach Ablauf der eingestellten Zeitdauer (z.B. 100 Sekunden) ein Signal von dem Timer 8 zu der Schaltervorrichtung 11 der Ladevorrichtung 2 gesendet. Die Schaltervorrichtung 11 aktiviert die Datenschnittstelle 9 mit dem ersten Transceiver 10 der Ladevorrichtung 2, sodass ein Signal (z.B. ein Bit) von dem Transceiver 10 der Ladevorrichtung 2 über die erste und zweite Kommunikationsleitung 26, 27 an die Datenschnittstelle 23 mit dem zweiten Transceiver 24 des Akkumulators 3 gesendet wird. Zur Aktivierung der Datenschnittstelle 9 der Ladevorrichtung 2 liegt an der Schaltvorrichtung 11 eine 5 Volt-Spannung an. Es ist jedoch auch möglich, dass zur Aktivierung der Datenschnittstelle 9 der Ladevorrichtung 2 mehr oder weniger als 5 Volt nötig sind.
Zum Senden eines Signals in Form eines Bits über das Kommunikationssystem, wird sowohl die COM-High-Leitung 26 als auch die COM-Low-leitung 27 in einen dominanten Zustand versetzt. Der Aufweckschaltkreis 22 des Akkumulators 3 ist mit der COM-High-Leitung 26 verbunden. Um die Steuerungselektronik 20 des Akkumulators 3 von dem Deaktivierungsmodus wieder in einen Aktivierungsmodus einzustellen, benötigt der Aufweckschaltkreis 22 des Akkumulators 3 eine elektrische Spannung von mindestens 0,9 Volt. Zur Versorgung des Aufweckschaltkreises 22 mit einer ausreichenden elektrischen Spannung wird der Spannungswert von der COM-High-Leitung 26 im dominanten Zustand des als CAN-Datenbuses ausgestalteten Kommunikationssystems an den Aufweckschaltkreis 22 gesendet. Der Spannungswert der COM-High-Leitung 26 in einem dominanten Zustand beträgt dabei 3,5 Volt, sodass eine ausreichend große Spannung zur Aktivierung des Aufweckschaltkreises 22 zur Verfügung steht. Alternativ ist es auch möglich, dass der Spannungswert mit 1,5 Volt der COM-Low bzw. zweite Kommunikationsleitung 27 zur Versorgung des Aufweckschaltkreises 22 mit einer ausreichenden elektrischen Spannung (d.h. größer als 0,9 Volt) verwendet wird. Der Aufweckschaltkreis 22 ist dafür mit der COM-Low bzw. zweite Kommunikationsleitung 27 verbunden.

Der Aufweckschaltkreis 22 stellt nach dem Detektieren des Spannungswerts der COM-High-Leitung bzw. ersten Kommunikationsleitung 26 im dominanten Zustand die Steuerungselektronik 20 des Akkumulators 3 von dem Deaktivierungsmodus wieder in den Aktivierungsmodus. Entsprechendes gilt, wenn in einer alternativen Ausgestaltungsform der Aufweckschaltkreis 22 mit der COM-Low bzw. zweite Kommunikationsleitung 27 verbunden ist. Im Aktivierungsmodus wird ein Signal von der Steuerungselektronik 20 an die Steuerung der Ladevorrichtung 2 gesendet, wodurch der Ladevorgang für die Energiespeicherzellen 19 fortgesetzt wird. Fortsetzung des Ladevorgangs bedeutet, dass der Akkumulator 3 den von der Ladevorrichtung 2 zum Akkumulator 3 fließenden Ladestrom mit einer entsprechenden Stromstärke anfordert oder den von der Ladevorrichtung 2 angebotenen Ladestrom mit der korrekten Stromstärke freigibt.

Gemäß einer alternativen Ausgestaltungsform kann es auch möglich sein, dass der Timer 8 nach Ablauf der vorbestimmten Zeitdauer ein Signal an die Datenschnittstelle 9 der Ladevorrichtung 2 sendet, woraufhin das als CAN-Datenbus ausgestaltete Kommunikationssystem die COM-High-Leitung 26 nicht in einen dominanten Zustand versetzt. Anstelle dessen, wird das als CAN-Datenbus ausgestaltete Kommunikationssystem lediglich so aktiviert, dass sich die COM-High-Leitung 26 in einem rezessiven Zustand befindet. Da sich der Spannungswert der COM-High-Leitung 2,5 Volt beträgt, kann der rezessive Zustand der COM-High-Leitung 26 gemäß dem vorstehend beschriebenen Verfahren auch schon für die Aktivierung des Aufweckschaltkreises 22 des Akkumulators 3 verwendet werden. Entsprechendes gilt, wenn der Aufweckschaltkreises 22 des Akkumulators 3 mit der COM-Low-Leitung 27 verbunden ist.

Für den Fall, dass nach Wiederbeginn des Ladevorgangs die Temperatur des Akkumulators 3 immer noch einen kritischen Schwellwert übersteigt, kann der vorstehend beschriebene Vorgang wiederholt werden. Der Ladevorgang wird erneut unterbrochen und der Akkumulator 3 wird erneut für eine bestimmte Zeitdauer deaktiviert. Zum Reaktivieren des Akkumulators 3 bzw. der Steuerungselektronik 20 nach der Zeitdauer wird der Timer 8 entsprechend eingestellt. Die am Timer 8 eingestellte Zeitdauer kann dabei variiert werden. So kann für eine wiederholte Unterbrechung zum Abkühlen eine Zeitdauer gewählt werden, die der Hälfte der zuletzt eingestellten Zeitdauer entspricht. Die Länge der ausgewählten Zeitdauer steht in Abhängigkeit zu der Temperatur des Akkumulators 3 zu Beginn der Unterbrechung.

Alternativ kann zur Aktivierung des Aufweckschaltkreises 22 des Akkumulators 3 auch den Spannungswert der COM-High-Leitung bzw. der ersten Kommunikationsleitung 26 im rezessiven Zustand detektiert werden. Hierbei wird eine Spannung mit 2,5 Volt von der COM-High-Leitung bzw. der ersten Kommunikationsleitung 26 an den Aufweckschaltkreis 22 gesendet. Da zum Aktivieren des Aufweckschaltkreises 22 eine Spannung größer als 0,9 Volt nötig ist, ist auch der Spannungswert der COM-High-Leitung bzw. der ersten Kommunikationsleitung 26 im rezessiven Zustand ausreichend.

Gemäß einer weiteren Alternative kann zur Aktivierung des Aufweckschaltkreises 22 des Akkumulators 3 auch den Spannungswert der COM-Low-Leitung bzw. der zweiten Kommunikationsleitung 27 im rezessiven Zustand detektiert werden. Auch in diesem Fall ist der Spannungswert größer als 0,9 Volt, nämlich ebenfalls 2,5 Volt.

## Patentansprüche

1. Verfahren zum Laden eines Akkumulators (3) durch eine Ladevorrichtung (2),
wobei der Akkumulator (3) wenigstens eine Energiespeicherzelle (19), eine erste Datenschnittstelle (23) sowie einen Aufweckschaltkreis (22) enthält zum Aktivieren einer Steuerungselektronik (20) des Akkumulators (3) und die Ladevorrichtung (2) eine zweite Datenschnittstelle (9), eine Steuerung (6), einen Timer (8) sowie eine Schaltervorrichtung (11) enthält, und wobei die Datenschnittstellen (9, 23) über eine erste und zweite Kommunikationsleitung (26, 27) für eine differentielle Kommunikation zwischen dem Akkumulator (3) und der Ladevorrichtung (2) miteinander verbunden sind,
**gekennzeichnet durch** die Verfahrensschritte
- Einstellen des Timers (8) auf eine vorbestimmte Zeitdauer;
- Einstellen der Steuerungselektronik (20) des Akkumulators (3) in einen Deaktivierungsmodus, sodass kein Ladestrom von der Ladevorrichtung (2) zu dem Akkumulator (3) fließt und kein Strom von der wenigstens einen Energiespeicherzelle (19) zu der Steuerungselektronik (20) des Akkumulators (3) fließt;
- Senden wenigstens eines Signals von der Ladevorrichtung (2) zu dem Akkumulator (3) über die erste und zweite Kommunikationsleitung (26, 27) nach Ablauf der vorbestimmten Zeitdauer;
- Aktivieren des Aufweckschaltkreises (22) zum Aktivieren einer Steuerungselektronik (20) durch Detektieren eines Spannungswertes von der ersten oder zweiten Kommunikationsleitung (26, 27), wobei der Spannungswert entweder dem dominanten oder rezessiven Zustand der ersten oder zweiten Kommunikationsleitung (26, 27) entspricht;
- Einstellen der Steuerungselektronik (20) in einen Aktivierungsmodus durch den Aufweckschaltkreis (22); und
- Anforderung oder Freigabe eines Ladestroms von der Ladevorrichtung (2) durch den Akkumulator (3).

2. System enthaltend einen Akkumulator (3) und eine Ladevorrichtung (2) zur Durchführung des Verfahrens nach Anspruch 1,
**wobei** der Akkumulator wenigstens eine Energiespeicherzelle (19), eine erste Datenschnittstelle (9) sowie einen Aufweckschaltkreis (22) enthält zum Aktivieren einer Steuerungselektronik (20) des Akkumulators (3) und die Ladevorrichtung (2) eine zweite Datenschnittstelle (23), eine Steuerung (6), einen Timer (8) sowie eine Schaltervorrichtung (11) enthält, und wobei die Datenschnittstellen (9, 23) über eine erste und zweite Kommunikationsleitung (26, 27) für eine differentielle Kommunikation zwischen dem Akkumulator (3) und der Ladevorrichtung (2) miteinander verbunden sind.

3. Akkumulator (3) zur Durchführung des Verfahrens nach Anspruch 1,
**wobei** der Akkumulator (3) wenigstens eine Energiespeicherzelle (19), eine erste Datenschnittstelle (9) sowie einen Aufweckschaltkreis (22) enthält zum Aktivieren einer Steuerungselektronik (20) des Akkumulators (3).

4. Ladevorrichtung (2) zur Durchführung des Verfahrens nach Anspruch 1,
**wobei** die Ladevorrichtung (2) eine zweite Datenschnittstelle (9), eine Steuerung (6), einen Timer (8) sowie eine Schaltervorrichtung (11) enthält.
